# EUROPÄISCHE PATENTSCHRIFT

(11) **EP 1 387 743 B1**
(45) Veröffentlichungstag und Bekanntmachung des Hinweises auf die Patenterteilung: **21.06.2006**
(21) Anmeldenummer: 02769463.7
(22) Anmeldetag: 02.05.2002
(51) Int. Cl.: B27D 5/00, B23C 3/12

(54) **KANTENFRÄSAGGREGAT FÜR EINE PROGRAMMGESTEUERTE DURCHLAUFMASCHINE**
EDGE MILLING UNIT FOR A PROGRAM-CONTROLLED THROUGHPUT MACHINE
UNITE DE DETOURAGE POUR UNE MACHINE CONTINUE COMMANDEE PAR PROGRAMME

(30) Priorität: 17.05.2001 DE 10124307
(43) Veröffentlichungstag der Anmeldung: 11.02.2004
(73) Patentinhaber: IMA Klessmann GmbH Holzbearbeitungssysteme, 32312 Lübbecke (DE)
(72) Erfinder: MARTIN, Rose, 32339 Espelkamp (DE); SCHEKELMANN, Karl-Heinz, 323339 Espelkamp (DE)
(74) Vertreter: Elbertzhagen, Otto
(86) Internationale Anmeldenummer: PCT/EP2002/004815
(87) Internationale Veröffentlichungsnummer: WO 2002/092301

(56) Entgegenhaltungen:
- DE-A- 4 030 138
- DE-A- 19 644 137
- DE-C- 3 732 810

## Beschreibung

### Technisches Gebiet

Die Erfindung bezieht sich auf ein Kantenfräsaggregat für eine programmgesteuerte Durchlaufmaschine der im Oberbegriff des Patentanspruchs 1 näher bezeichneten Art.

### Stand der Technik

Aus dem Dokument DE 40 30 138 A1 ist eine Maschine mit einem Kantenfräsaggregat bekannt, dessen Steuerung über eine Tastvorrichtung mit einem Tastrad erfolgt, wie es deutlicher aus dem Dokument US 2,839,107 hervorgeht. In modernerer Ausführung ist eine derartige Maschine programmgesteuert, so werden auch die Positioniereinrichtungen für den Support des Fräswerkzeugs in bekannter Weise über das Maschinenprogramm justiert.

Das Dokument DE 196 44 137 A1 beschreibt ein Kantenfräsaggregat, welches ebenfalls für eine die Werkstücke im Durchlauf bearbeitende Maschine bestimmt ist. Das Fräsaggregat weist einen Support auf, mittels dem das Fräswerkzeug relativ zu dem auf einer Werkstückauflage gehaltenen Werkstück räumlich in einer Arbeitsstellung justierbar ist. In dieser Arbeitsstellung ist das Fräswerkzeug im Bedarfsfall zwischen einer ersten Bearbeitungsstellung und einer zweiten Bearbeitungsstellung hin- und herbewegbar. Dazu ist eine Verstellvorrichtung mit einem zweiten, plattenförmigen Support vorgesehen, auf dem der das Fräswerkzeug tragende Support angeordnet ist und der mittels einer Positioniereinrichtung zwischen den beiden Bearbeitungsstellungen verfahren wird. Unabhängig davon erfolgt das Führen des Fräswerkzeuges entlang der Werkstückkontur mittels einer an der Werkstückkante anliegenden Tastvorrichtung.

Aus dem Dokument DE 37 32 810 C1 ist weiter eine Vorrichtung zur Bearbeitung der Kantenränder von fortlaufend bewegten, plattenförmigen Werkstücken bekannt, bei dem anstelle eines einzigen Fräswerkzeugs ein axial verschiebbarer Werkzeugsatz vorhanden ist. Damit lassen sich zwei oder mehrere unterschiedliche Bearbeitungsvorgänge an den Kantenrändern der Werkstücke durchführen, ohne die Rüstzeiten verlängern oder die Maschinenlänge vergrößern zu müssen.

Bei einem Kantenfräsaggregat für eine programmgesteuerte Durchlaufmaschine reichen für das exakte Bündigfräsen des auf die Schmalflächenseiten der Werkstücke aufgeleimten Kantenstreifens zum einen die Vorgaben der in der X-Achse und der Z-Achse mit dem Fräswerkzeug abzufahrenden Bahnen im Maschinensteuerprogramm und zum anderen das bloße Nachführen des Fräswerkzeugs entlang der vom Tastrad abgetasteten Werkstückkontur nicht aus. Hierbei ist zu berücksichtigen, daß in Richtung der X-Achse der Maschine die betreffende Positioniereinrichtung vornehmlich den Mitlauf des Fräswerkzeugs mit dem jeweils zu bearbeitenden Werkstück entlang einem Wegstück steuert. Zudem wird von der Programmsteuerung der Maschine die abzufahrende Bahnkontur kleiner als der Werkstückumriß vorgegeben, damit durch das Untermaß gegenüber dem theoretischen Werkstückumriß ein Tastspiel besteht, das erforderlich ist, damit über das Tastrad ein genaueres Nachführen des Fräswerkzeugs nach der tatsächlichen Werkstückumrißkontur möglich ist. Die gesamte Bahn-Positionierung des Fräswerkzeugs hat eine eigene Dynamik, was bei Richtungswechseln an der Werkstückkontur, insbesondere bei Ecken oder Rundungen mit geringem Krümmungsradius, an den in Werkstückdurchlaufrichtung vorn- und hintenliegenden Werkstückecken zu Ungenauigkeiten führt. So kann an einer Stelle zuviel von dem Kantenstreifen abgetragen werden, wobei das Fräswerkzeug das Plattenmaterial anschneidet. An anderer Stelle kann ein Überstand des Kantenstreifens gegenüber der angrenzenden Werkstückoberfläche verbleiben.

Um solche Fehler beim Bündigfräsen des Kantenstreifens zu einem Teil ausgleichen zu können, ist bei den bekannten Kantenfräsaggregaten das Fräswerkzeug relativ zum Tastrad verstellbar. Folglich befindet sich zumindest in Richtung quer zur X-Achse der Maschine gesehen, also in Richtung der Y-Achse, das Fräswerkzeug nicht dort, wo das Tastrad die Werkstückoberfläche abfährt, es wird deshalb mit dem Fräswerkzeug nicht exakt dort geschnitten, wo die Werkstückabtastung erfolgt. Je nachdem ob das Kantenfräsaggregat dafür vorgesehen ist, neben einer der beiden Längskanten des Kantenstreifens entweder die in Durchlaufrichtung vornliegende Kante oder die in Durchlaufrichtung hintenliegende Kante des Kantenstreifens, deren Längen von der Dicke des Werkstücks abhängig sind, zu besäumen, wird entweder ein gewisser Vorlauf des Tastrades oder ein Nachlauf des Tastrades gegenüber dem Fräswerkzeug fest eingestellt. Dies erfordert eine empirische Ermittlung bei Probedurchläufen von Werkstücken und eine Justage des Fräswerkzeugs relativ zum Tastrad von Hand bei Maschinenstillstand, womit erhebliche Rüstzeiten beim Umstellen des Kantenfräsaggregates auf die jeweilige Werkstückkonfiguration verbunden sind. Dennoch führen solche fest eingestellten Korrekturen der Fräsungenauigkeiten beim laufenden Bearbeitungsvorgang dazu, daß der Ausgleich einer Fräsungenauigkeit an einer Stelle einen Fräsfehler an einer anderen Stelle nach sich zieht, weshalb man mühsam das Optimum der notwendigen Korrekturen erarbeiten muß.

### Die Erfindung

Der Erfindung liegt deshalb die Aufgabe zugrunde, ein Kantenfräsaggregat der eingangs genannten Art zu schaffen, bei dem die Justage des Fräswerkzeugs relativ zum Tastrad während der Bearbeitungsvorgänge an den Werkstücken geändert werden kann.

Diese Aufgabe wird bei einem Kantenfräsaggregat der gattungsbildenden Art nach der Erfindung durch die Merkmale des Patentanspruchs 1 gelöst.

Für die Erfindung ist wesentlich, daß die Positionierung des Fräswerkzeugs nicht nur motorisch vorgenommen werden kann, sondern die dafür vorgesehenen Positionierantriebe zusätzliche Maschinenachsen darstellen, die in der Programmsteuerung der Durchlaufmaschine mitberücksichtigt werden. So erfolgt nach wie vor die Nachführung des Fräswerkzeugs entlang der Werkstückkontur durch das Tastrad und das Mitführen des Fräswerkzeugs mit dem durchlaufenden Werkstück durch die X-Positioniereinrichtung, jedoch wird die Feineinstellung der abzufahrenden Fräskontur über die beiden Positionierantriebe auf dem das Fräswerkzeug tragenden Support vorgenommen. Da die jeweilige Position der Positionierantriebe durch das Maschinensteuerprogramm vorgegeben wird, können beim Probelauf von Werkstücken sich als notwendig ergebende Positionsänderungen der Positionierantriebe in das Steuerungsprogramm eingespeichert und bei Bedarf wieder geändert werden. Hierbei geht es um solche Positionsänderungen des Fräswerkzeugs relativ zum Tastrad, die während des Bearbeitungsvorganges an einem durchlaufenden Werkstück vorgenommen werden. Zu den Positioniereinrichtungen, die die Bahn des Fräswerkzeuges in der X-Z-Ebene steuern, arbeiten interpolierend bzw. überlagernd die zusätzlichen Positionierantriebe, die für eine Feinjustage des Fräswerkzeugs bis auf Bruchteile eines Millimeters eingerichtet sind.

Von besonderem Vorteil ist eine solche automatische Achspositionierung des Fräswerkzeugs, wenn dieses als Multifunktionswerkzeug in Form eines Stufenfräsers ausgebildet ist und auf Stufen unterschiedlichen Durchmessers angeordnete Schneiden hat. Hierbei muß eine entsprechende Anzahl von Tasträdern vorgesehen werden, die entsprechend unterschiedliche Durchmesser haben. So kann auch für jede Schneidenstufe des Multifunktionswerkzeugs und das zugehörige Tastrad mit dem gleichen Durchmesser die passende Steuerung der Positionsantriebe im Maschinenprogramm vorgesehen werden.

Um vor allem Formfräser für gerundete Kanten an den auf die Werkstückschmalflächenseiten aufgebrachten Kantenstreifen exakter positionieren zu können, ist es von Vorteil, für den den Positionierschlitten tragenden Support zusätzlich einen Positionierantrieb vorzusehen, der eine Verstellung des Fräswerkzeugs quer zur X-Achse, in der üblichen Y-Achse, bewirkt. Auch hierdurch wird die Bearbeitungsgenauigkeit erhöht, und es kann dem Werkzeugverschleiß Rechnung getragen werden.

### Kurzbeschreibung der Zeichnungsabbildungen

Die Erfindung wird nachfolgend anhand der Zeichnung an einem Ausführungsbeispiel noch näher erläutert. Dabei zeigen:
- Fig. 1: die Ansicht einer der Schmalflächenseiten eines plattenförmigen Werkstücks mit darauf aufgebrachtem Kantenstreifen,
- Fig. 2: die Ansicht des plattenförmigen Werkstücks gemäß Fig. 1, jedoch nach einem ersten Bearbeitungsvorgang zur Veranschaulichung des Bearbeitungsweges des betreffenden Fräswerkzeugs,
- Fig. 3: die Draufsicht auf das Werkstück nach den Fig. 1 und 2 mit daran in Eingriff befindlichem Fräsaggregat,
- Fig. 4: einen Teilschnitt durch das Werkstück nach Fig. 2 entlang der dortigen Linie IV-IV.
- Fig. 5: die Seitansicht eines kompletten Kantenfräsaggregates in Richtung der Y-Achse der Maschine gesehen,
- Fig. 6: die Draufsicht auf das Kantenfräsaggregat nach Fig. 5,
- Fig. 7: die Seitansicht des Kantenfräsaggregates nach den Figuren 5 und 6 in Richtung der X-Achse der Maschine gesehen und
- Fig. 8: die Ansicht zweier einander entsprechender Kantenfräsaggregate für die nacheinander erfolgende Bearbeitung durchlaufender Werkstücke an der oberen und an der unteren Werkstückkante.

### Wege zur Ausführung der Erfindung

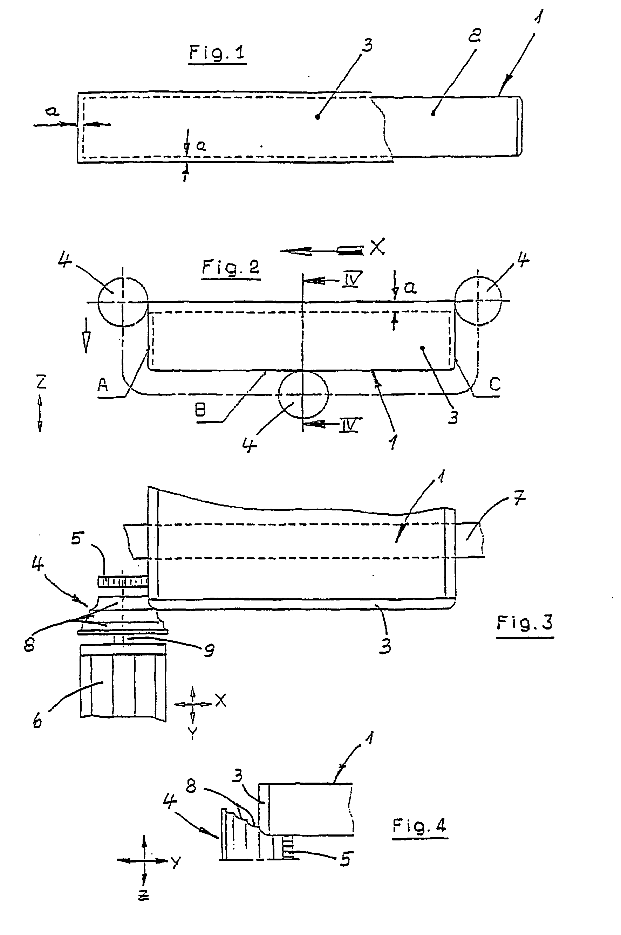

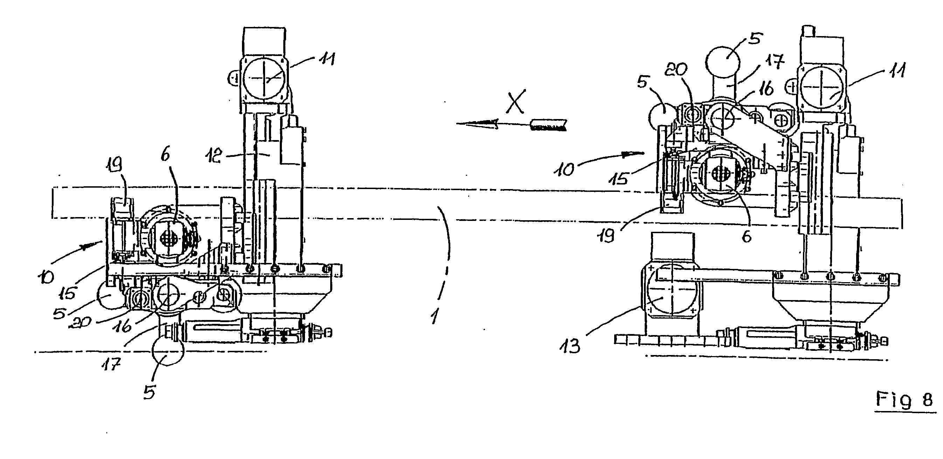

Im einzelnen erkennt man in Fig. 1 ein plattenförmiges Werkstück 1, auf dessen eine Schmalflächenseite 2 ein Kantenstreifen 3 aus einem geeigneten Kantenmaterial aufgeleimt ist. Über die die Schmalflächenseite 2 des Werkstücks 1 begrenzenden Kanten steht der Kantenstreifen 3 allseits mit einem Überstand a über, der nicht gleichmäßig sein muß. Das Aufbringen des Kantenstreifens 3 auf die Werkstück-Schmalflächenseite 2 erfolgt in einer sogenannten Durchlaufmaschine, in der die Werkstücke auf einer Transportvorrichtung horizontal aufliegend an den einzelnen Bearbeitungsstationen entlang befördert werden. In einer Besäumstation einer derartigen Maschine erfolgt die Abtragung des Überstandes a des Kantenstreifens 3 mittels eines Fräswerkzeuges 4, dessen Führung entlang einer programmgesteuerten Bahn in Fig. 2 veranschaulicht ist. Das betreffende Werkstück durchläuft die Besäumstation in Richtung der X-Achse der Durchlaufmaschine, in der das Fräswerkzeug 4 entlang einem Wegstück mit dem Werkstück 1 mitgeführt wird. Das dargestellte Fräswerkzeug 4 besäumt den Kantenstreifen 3 zunächst entlang derjenigen Eckkante des Werkstücks 1, die in der Durchlaufrichtung vorn liegt. Hierbei durchfährt das Fräswerkzeug 4 den in Fig. 2 dargestellten Bereich A, in welchem das Fräswerkzeug 4 in Richtung der X-Achse mit der Durchlaufgeschwindigkeit des Werkstücks 1 mitgeführt werden muß. Zugleich wird das Fräswerkzeug 4 in Höhenrichtung, also in Richtung der Z-Achse der Maschine verfahren. Danach besäumt das Fräswerkzeug 4 den Kantenstreifen 3 entlang der unteren, längslaufenden Kante des Werkstücks 1, dieser Bereich ist in Fig. 2 mit B bezeichnet. In diesem Bereich werden das Werkstück 1 und das Fräswerkzeug 4 in Richtung der X-Achse der Maschine relativ zueinander bewegt, beispielsweise kann das Werkzeug 4 hier in Richtung der X-Achse angehalten werden, womit die Durchlaufgeschwindigkeit des Werkstücks die Relativgeschwindigkeit zum Fräswerkzeug 4 ist. Abschließend bearbeitet das Fräswerkzeug 4 die Eckkante des Werkstücks 1, die in Durchlaufrichtung des Werkstücks 1 hinten liegt. In dem entsprechenden, in Fig. 2 mit C bezeichneten Bereich wird das Fräswerkzeug 4 wiederum in Richtung der X-Achse mit dem Werkstück 1 mitbewegt, also mit der Durchlaufgeschwindigkeit verfahren, überlagert ist ein Hub des Fräswerkzeugs 4 in Richtung der Z-Achse nach oben hin. Nach Beendigung des Werkstückeingriffs wird das Fräswerkzeug 4 wieder in seine Ausgangsposition zurückgefahren. Zu ergänzen ist noch, daß entlang der oberen längslaufenden Kante des Werkstücks 1 die Besäumung des Kantenstreifens 3 durch ein zweites Fräswerkzeug vorgenommen wird, was nachstehend noch anhand von Fig. 8 erläutert wird.

Die Bahn, die das Fräswerkzeug 4 in der X-Z-Ebene abfährt, entspricht nicht der tatsächlichen Umrißlinie des Werkstücks 1 in dem abgefahrenen Gesamtbereich, also in den Bereichen A, B und C gemäß Fig. 2. Vielmehr wird die Bahnkurve durch das Steuerprogramm der Maschine mit einem Untermaß gegenüber der Werkstückumrißlinie vorgegeben, und damit das Fräswerkzeug 4 nicht die Bahnkurve mit diesem Untermaß abfährt, erfolgt eine Ausgleichssteuerung des Fräswerkzeuges 4 über eine Tastrolle 5, welche die Werkstückfläche nahe dem zu besäumenden Kantenstreifen abtastet. Dies zeigt in einer schematischen Darstellung Fig. 3, in der auch die Transportvorrichtung 7 angedeutet ist, auf der die Werkstücke 1 durch die Besäumstation der Durchlaufmaschine flachliegend hindurchbefördert werden. Ferner ist hier dargestellt, daß das Fräswerkzeug 4 unmittelbar auf der Welle 9 eines Fräsmotors 6 sitzt und eine Mehrzahl von Stufen hat, die im Durchmesser unterschiedlich sind, um sich verschiedenen Fräsbedingungen anpassen zu können. Wie aus den Figuren 3 und 4 weiter hervorgeht, ist das Tastrad 5 weitgehend koaxial zum Fräswerkzeug 4 angeordnet und kann doch sowohl in Richtung der X-Achse, der Z-Achse und auch der Y-Achse relativ zum Fräswerkzeug 4 automatisch verstellt werden, und zwar während eines Bearbeitungsvorganges an dem jeweiligen Werkstück 1.

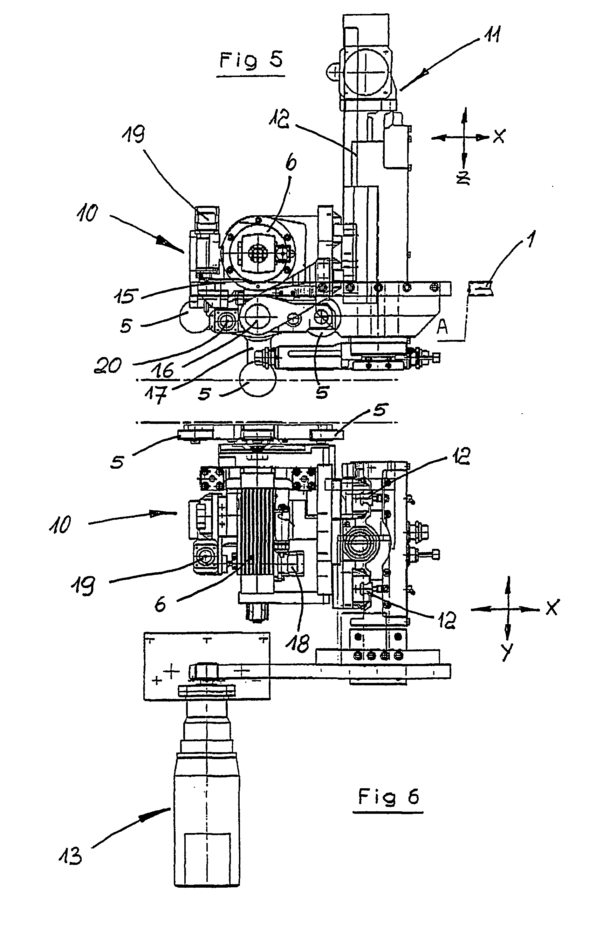

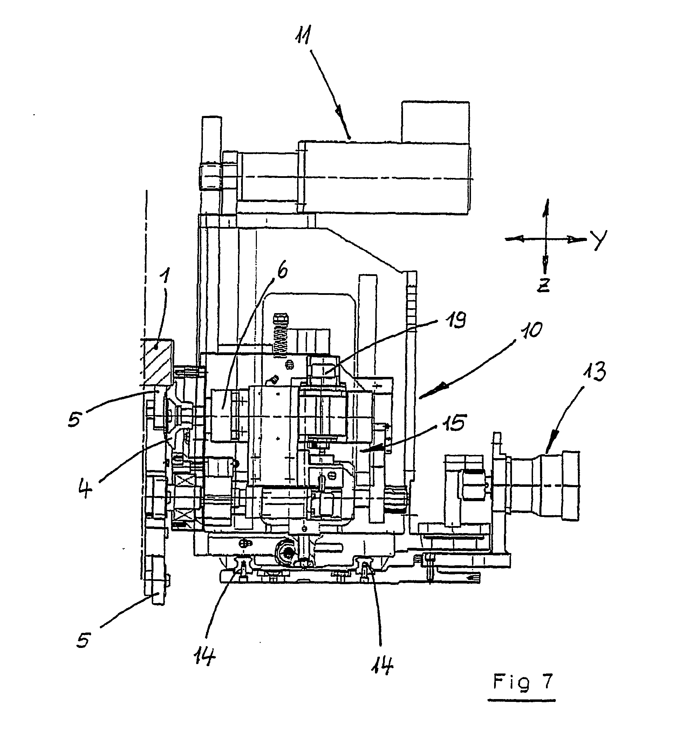

Wie dazu die Figuren 5, 6 und 7 zeigen, ist der Fräsmotor 6 mit dem Fräswerkzeug 4 auf einem Support 10 angeordnet, der in der X-Achse und in der Z-Achse der Maschine verfahren werden kann, um der vom Maschinensteuerprogramm vorgegebenen Bahnkurve nachzufahren. Dazu ist eine erste Positioniereinrichtung 11 mit einem Führungssystem 12 vorhanden, welche das Verfahren des Supportes 10 in der Z-Achse der Maschine bewirken. Unter Bezugnahme auf Fig. 2 ist das Verfahren des Supports 10 in Richtung der Z-Achse erforderlich, um die Bearbeitung des Kantenstreifens 3 am Werkstück 1 in den Bereichen A und C vornehmen zu können. Dazu ist jedoch das gleichzeitige Mitführen des Supports 10 mit dem durchlaufenden Werkstück 1 erforderlich. Dazu gibt es eine weitere Positioniereinrichtung 13 mit einem Führungssystem 14, worüber der Support 10 in der X-Achse verfahren wird, und zwar mit der Durchlaufgeschwindigkeit des Werkstücks 1, solange die Bereiche A und C des Kantenstreifens 3 am Werkstück 1 bearbeitet werden. Wenn in den Bereich B übergewechselt wird, kann über die Positioniereinrichtungen 11 und 13 auch eine in den beiden Maschinenachsen X und Z resultierende Bewegung des Supports 10 herbeigeführt werden, um beispielsweise an den Ecken des Werkstücks 1 bzw. an dem die Werkstückecken bildenden Kantenstreifen 3 Rundungen zu fräsen.

Auf dem Support 10 ist ein Positionierschlitten 15 angeordnet, ferner trägt der Support 10 eine Schwenkachse 16, an der sternförmig Schwenkarme 17 vorstehen, an deren Enden Tasträder 5 unterschiedlichen Durchmessers gelagert sind, die den einzelnen Durchmessern des gestuften Fräswerkzeugs entsprechen. Jeweils entsprechend der verwendeten Stufe des Fräswerkzeugs 4 kann das zugehörige Tastrad 5 in eine koaxiale oder annähernd koaxiale Lage mit dem Fräswerkzeug 4 geschwenkt werden. Die Position jedes einzelnen Tastrades 5 in der jeweiligen Tastlage an dem betreffenden Werkstück 1 ist allein von der Position des Supportes 10 abhängig, die über die Positioniereinrichtungen 11 und 13 vorgegeben wird. Dies ist insoweit wichtig, als das Fräswerkzeug 4 mitsamt dem Fräsmotor 6 eine andere als eine exakt koaxiale Lage zu dem jeweiligen Tastrad 5 einnehmen kann.

Die Besonderheit besteht nämlich darin, daß der Positionierschlitten 15 relativ zum Support 10 zumindest in Richtung der X-Achse und in Richtung der Z-Achse vorzugsweise auch in Richtung der Y-Achse motorisch verstellt werden kann, was über das Maschinenprogramm vorgenommen wird und dort entsprechend eingespeichert werden kann.

Hierzu ist auf dem Support 10 ein X-Positionierantrieb 18 angeordnet, der mit einer entsprechenden, in der X-Richtung verlaufenden Führung für den Positionierschlitten 15 zusammenwirkt. In gleicher Weise ist auf dem Support 10 ein Z-Positionierantrieb 19 und ein Y-Positionierantrieb 20 mit entsprechenden Führungen für den Positionierschlitten 15 vorgesehen.

Der X-Positionierantrieb 18, der Z-Positionierantrieb 19 und der Y-Positionierantrieb 20 können angesteuert werden während ein Besäumen des Kantenstreifens 3 an einem Werkstück 1 vorgenommen wird. Entsprechend überlagern sich die Verstellbewegungen des Positionierschlittens 15 den Verfahrbewegungen des Supports 10, die über die Positioniereinrichtungen 11 und 13 bewirkt werden. Somit kann über den Positionierschlitten 15 eine Feinjustierung des Fräswerkzeugs 4 vorgenommen werden, die Verfahrfehler in der gesamten Positionierung des Fräswerkzeugs 4, die durch die Maschinendynamik bestimmt sind, selbstätig ausgleicht.

Wie Fig. 8 zeigt, werden zweckmäßig in der Besäumstation der Durchlaufmaschine in der Durchlaufrichtung der Werkstücke 1 hintereinander ein erstes Kantenfräsaggregat für die Bearbeitung der oberen längslaufenden Kanten der Werkstücke 1 und ein zweites Kantenfräsaggregat für die Bearbeitung der unten längslaufenden Werkstückkanten sowie der in Dickenrichtung der Werkstücke verlaufenden Kanten vorgesehen. So entspricht das in Fig. 8 links dargestellte Kantenfräsaggregat der Ausführung nach den vorstehend diskutierten Figuren 5 - 7. Das in Fig. 8 rechte Kantenfräsaggregat für die Bearbeitung der oberen längslaufenden Kanten der Werkstücke 1 ist weitgehend gleich wie das in Durchlaufrichtung nachfolgende Fräsaggregat aufgebaut, im wesentlichen hat man es hier lediglich mit einer spiegelbildlichen Anordnung der einzelnen Aggregateelemente zu tun.

## Patentansprüche

1. Kantenfräsaggregat für eine programmgesteuerte Durchlaufmaschine zum Bearbeiten von plattenförmigen Werkstücken (1) aus Holz und/oder Holzaustauschstoffen, insbesondere von Platten für den Möbelbau oder Innenausbau, auf deren mit ihrer Längsrichtung in Durchlaufrichtung liegenden Schmalflächenseite (2) ein Kantenstreifen (3) mit Überstand aufgebracht wird, mit einem Fräswerkzeug (4) auf der Welle (9) eines Fräsmotors (6), der auf einem Support (10) angeordnet ist, der mittels programmgesteuerterter Positioniereinrichtungen (11,12; 13, 14) in der Werkstück-Durchlaufrichtung, der X-Achse, und senkrecht dazu in Werkstück-Dickenrichtung, der Z-Achse, annähernd dem Werkstück-Umriß sowie teils mit dem jeweiligen Werkstück entlang einem Wegstück mitlaufend gesteuert ist und der ferner mittels einem mit dem Fräswerkzeug (4) koaxialen sowie dessen Durchmesser aufweisenden Tastrad (5), das die an den Kantenstreifen (3) angrenzende Werkstückfläche abfährt, am Werkstück (1) zum Nachführen des Fräswerkzeugs (4) nach der vom Tastrad (5) abgetasteten Kontur abgestützt ist, wobei der Fräsmotor (6) mit dem Fräswerkzeug (4) auf dem Support (10) relativ zum Tastrad (5) verstellbar ist,
**dadurch gekennzeichnet,**
**daß** auf dem Support (10) ein Fein-Positionierschlitten (15) angeordnet ist, auf dem der Fräsmotor (6) mit dem Fräswerkzeug (4) sitzt und der relativ zum Support (10) in Richtung der X-Achse und in Richtung der Z-Achse programmgesteuert motorisch verfahrbar ist, wozu auf dem Support (10) ein X-Positionierantrieb (18)und ein Z-Positionierantrieb (19) angeordnet sind, die während eines Bearbeitungsvorganges über das Maschinenprogramm verstellbar sind und deren Positionen im Maschinenprogramm zwecks Überlagerung der Positionen der Positioniereinrichtungen (11, 12; 13, 14) gespeichert werden.

2. Kantenfräsaggregat nach Anspruch 1,
**dadurch gekennzeichnet,**
**daß** der Fein-Positionierschlitten (15) auf dem Support (10) zusätzlich quer zur Werkstückdurchlaufrichtung, in-Richtung der Y-Achse, motorisch verfahrbar ist, wozu ein Y-Positio-nierantrieb (20) am Support (10) angeordnet ist.

3. Kantenfräsaggregat nach Anspruch 1 oder 2,
**dadurch gekennzeichnet,**
**daß** das Fräswerkzeug (4) ein Multifunktionswerkzeug in Form eines Stufenfräsers mit auf Stufen unterschiedlichen Durchmessers angeordneten Schneiden ist und eine entsprechende Anzahl von Tasträdern (5) mit verschiedenen Durchmessern vorhanden ist, die an sternförmig miteinander ausgerichteten, am Suppor.t (10) an auf einer gemeinsamen Schwenkachse (16) angeordneten Schwenkarmen (17) gelagert sind und jeweils in eine mit dem Fräswerkzeug (4) koaxiale bzw. annähernd koaxiale Lage schwenkbar sind.

## Claims

1. Edge-milling unit for a program-controlled throughput machine for machining panel-type workpieces (1) of wood and/or wood substitute materials, more particularly of panels for the furniture industry or interior fittings industry, which have an edge strip (3) placed with an overhang on the narrow flat side (2) lying with its longitudinal direction in the throughput direction, with a milling tool (4) on the shaft (9) of a milling motor (6) which is mounted on a support (10) which by means of program-controlled positioning devices (11,12; 13, 14) is controlled to move along in the workpiece throughput direction, the x-axis, and perpendicular thereto in the workpiece thickness direction, the z-axis, close to the workpiece outline as well as in part with the relevant workpiece along a part of the route and which furthermore, by means of a scanning wheel (5) which is coaxial with the milling tool (4), has the diameter thereof and which moves on the workpiece surface adjoining the edge strip (3), is supported on the workpiece (1) for tracking the milling tool (4) according to the contour scanned by the scanning wheel (5), whereby the milling motor (6) is displaceable with the milling tool (4) on the support (10) relative to the scanning wheel (5),
**characterised in that**
on the support (10) is mounted a fine-positioning slide carriage (15) on which the milling motor (6) and milling tool (4) are seated and which is movable through motorised drive programmed-controlled relative to the support (10) in the direction of the X-axis and in the direction of the Z-axis, for which on the support (10) are mounted an X-positioning drive (18) and a Z-positioning drive (19) which during a machining process are displaceable through the machine program and whose positions are stored in the machine program for the purpose of superimposing on the positions of the positioning devices (11, 12; 13, 14).

2. Edge milling assembly according to claim 1.
**characterised in that**
the fine-positioning slide carriage (15) is movable by motorised drive on the support (10) additionally across the workpiece throughput direction, in the direction of the Y-axis, for which a Y-positioning drive (20) is mounted on the support (10).

3. Edge milling assembly according to claim 1 or 2,
**characterised in that**
the milling tool (4) is a multi-functioning tool in the form of a stepped milling machine with cutting edges arranged in steps of different diameter and a corresponding number of scanning wheels (5) with different diameters are provided which are mounted on swivel arms (17) aligned star-shaped with one another mounted on the support (10) on a common pivotal axis (16) and each able to pivot into a coaxial or practically coaxial position with the milling tool (4).

## Revendications

1. Unité de détourage pour une machine continue commandée par programme, pour le traitement de pièces (1) en forme de plaques, en bois et / ou en matières de remplacement du bois, en particulier de panneaux pour la fabrication de meubles ou pour l'aménagement intérieur, sur le côté étroit (2), orienté longitudinalement dans la direction de passage, desquelles est appliquée une bande de chant (3) faisant saillie, avec un outil de fraisage (4) sur l'arbre (9) d'un moteur de fraise (6) qui est agencé sur un support (10), qui, au moyen de dispositifs de positionnement (11, 12; 13, 14) commandés par programme, est conduit dans la direction de passage de la pièce, l'axe X, et perpendiculairement à celle-ci, dans la direction de l'épaisseur de la pièce, l'axe Z, approximativement selon le contour de ladite pièce, et en accompagnant le déplacement de la pièce concernée le long d'une partie du parcours, et qui, en outre, au moyen d'un galet de contact (5) coaxial à l'outil de fraisage (4) et présentant le même diamètre que lui, lequel roule sur la surface de la pièce voisine de la bande de chant (3), s'appuie sur la pièce (1) pour guider l'outil de fraisage (4) selon le contour contacté par le galet de contact (5), le moteur de fraise (6) pouvant être ajusté par rapport au galet de contact (5), avec l'outil de fraisage (4), sur le support (10),
**caractérisée en ce que**,
sur le support (10), est agencé un chariot de positionnement de précision (15), sur lequel le moteur de fraise (6) est installé avec l'outil de fraisage (4), et qui, motorisé et commandé par programme, peut être déplacé, par rapport au support (10), dans la direction de l'axe X et dans la direction de l'axe Z, ce pourquoi, sur ledit support (10), sont agencés un entraînement de positionnement X (18) et un entraînement de positionnement Z (19), qui, pendant un processus de traitement, peuvent être déplacés par l'intermédiaire du programme machine, et dont les positions sont mémorisées dans ledit programme machine aux fins de superposition des positions des dispositifs de positionnement (11, 12; 13, 14).

2. Unité de détourage selon la revendication 1,
**caractérisée en ce que**,
le chariot de positionnement de précision (15), sur le support (10), peut être, en plus, déplacé de manière motorisée, perpendiculairement à la direction de passage des pièces, dans la direction de l'axe Y, ce en vue de quoi un entraînement de positionnement Y (20) est agencé sur le support (10).

3. Unité de détourage selon revendication 1 ou 2,
**caractérisée en ce que**
l'outil de fraisage (4) est un outil multifonctionnel présentant la forme d'une fraise à étages avec des tranchants qui sont disposés sur des étages de différents diamètres, et que des galets de contact (5) de différents diamètres sont prévus en nombre correspondant, lesquels sont montés au support (10), sur des bras pivotants (17), orientés ensemble en forme d'étoile, agencés sur un axe de pivotement commun (16), et peuvent être respectivement pivotés dans une position coaxiale, respectivement approximativement coaxiale par rapport à l'outil de fraisage (4).
